# EUROPEAN PATENT SPECIFICATION

(11) **EP 2 493 326 B1**
(45) Date of publication and mention of the grant of the patent: **20.09.2017**
(21) Application number: 10773943.5
(22) Date of filing: 21.10.2010
(51) Int. Cl.: A23D 7/005, A23D 7/01

(54) **SPRAYABLE LIQUID EDIBLE COMPOSITIONS**
SPRÜHBARE ESSBARE FLÜSSIGZUSAMMENSETZUNGEN
COMPOSITIONS COMESTIBLES LIQUIDES PULVÉRISABLES

(30) Priority: 28.10.2009 GB 0918908; 28.10.2009 GB 0918911
(43) Date of publication of application: 05.09.2012
(73) Proprietor: MH Foods Limited, Esher, Surrey KT10 9PN (GB)
(72) Inventor: MUSSAWIR-KEY, Frederick Wade, Erith Kent DA8 2JA (GB)
(74) Representative: Swindell & Pearson Limited
(86) International application number: PCT/GB2010/001942
(87) International publication number: WO 2011/051651

(56) References cited:
- US-A- 4 142 003
- US-A- 5 650 185
- US-A- 6 113 970
- US-A1- 2008 044 523

## Description

The present invention relates to sprayable liquid edible compositions and in particular but not exclusively to sprayable non-stick cooking compositions.

US6113970 (Rainey) relates to oil-and-water emulsions that contain relatively large amounts of xanthan gum.

Similarly, US2008/044523 (Paul) relates to compositions that comprise large amounts of gum to produce a gel-like, highly viscous substance to be dispensed from a squeeze bottle.

According to the present invention there is provided a sprayable liquid edible composition comprising an oil component in an amount 0.1% to 70%, an aqueous component in an amount 25% to 98%, a non-stick component in an amount 0.1 % to 15% and a gum component in an amount 0.01% to 0.05% by weight of the composition.

Within this specification the percentages referred to are the percentage by weight of the total composition, unless explicitly stated otherwise.

The gum component may consist exclusively of xanthan gum or may comprise xanthan gum with other substances, in particular other polysaccharide substances and blends. The xanthan gum may comprise a hydrocolloid. The gum component may comprise xanthan gum and carrageenan. The gum component may comprise natural and/or synthetic xanthan gum including modifications and/or derivatives thereof. Where other substances are present these may be natural and/or synthetic, including modifications and/or derivatives thereof. The gum component may comprise, as an addition or an alternative to xanthan gum, one or more of sodium alginate, calcium alginate, potassium alginate, alginic acid, agar, carrageenan, processed eucheuma seaweed, carob (locust) bean gum, guar gum, tragacanth gum, acacia gum, tara gum, gellan gum, cellulose gum, cellulose ether, methyl cellulose gum. The gum component may be in the form of a dry particulate, such as flake, granule and/or powder.

The gum component may in certain embodiments comprise approximately 0.03% by weight.

The gum component may be dissolved, at least predominantly, in the aqueous component.

The non-stick component may comprise natural and/or synthetic lecithin and/or a modification, derivative or compound thereof. The non-stick component may be liquid at typical household room temperatures, particularly at temperatures between 15°C and 40°C. Alternatively, the non-stick component may be non-liquid. The lecithin may be de-oiled and may be in powder, paste and/or granular form. The non-stick component may comprise a combination of various forms, types and derivatives of lecithin or other non-stick agents, including soy lecithin, sunflower lecithin and/or rapeseed lecithin.

The non-stick component may be present in an amount between 1% and 10%, and in certain embodiments between 3% and 6% by weight of the composition.

The non-stick component acts in use to enable the composition to be used as a sprayable non-stick cooking composition finding particular application in cooking techniques such as frying, in particular shallow frying, roasting, sautéing, baking such as a parting composition for baking tins and baking sheets and the like.

The composition may also find application in non-cooking situations, such as the application to foods such as pasta and rice, to prevent sticking between the food particles or grains and containers, vessels, implements and the like.

The oil component may comprise any edible liquid oil, including one or more of vegetable oil, olive oil, extra virgin olive oil, virgin olive oil, refined olive oil, rapeseed oil, sunflower oil, soy bean oil, canola oil, cotton seed oil, corn oil, ground nut oil, grapeseed oil, light butter oil, fractionated oil such as medium chain triglycerides, refined fractions of mineral oil or any other plant derived oil. The oil component may include all oils present in the composition, and may have at least part of the non-stick component dissolved therein. The oil component may include oil and/or fat such as hydrogenated and part-hydrogenated oil/fat like palm oil, coconut oil, butter oil, usually non-liquid at the temperature at which the composition is sprayed, but which are dissolved in a liquid oil to render the combination sprayable.

The oil component may comprise between 0.1 % and 10% by weight of the composition. In alternative embodiments, the oil component may comprise between 10% and 60% by weight of the composition, and in further embodiments between 50% and 70% by weight.

In certain embodiments, the aqueous component may comprise between 30% and 80% by weight of the composition. In particular embodiments, the aqueous component may comprise between 25% and 50% by weight of the composition, and in still further embodiments between 75% and 90% by weight of the composition.

The aqueous component may be water or may comprise between 70% and 99% water.

The aqueous component may contain water soluble or generally water soluble components of the composition.

The composition is preferably sprayable at temperatures between 5°C and 50°C, and desirably at temperatures between 10°C and 25°C. Preferably, the composition is sprayable at normal or typical household or kitchen room temperatures, the locations at which the compositions are most likely to be used. The above temperatures are considered typical household or kitchen room temperatures, but it will be appreciated that in certain environments the temperatures may be slightly above or below these.

The composition may comprise a generally homogenous emulsion. The lecithin may act as an emulsifier within the composition.

The composition may comprise a culinary salt component present in an amount between 0.1% and 25% by weight of the aqueous component. The culinary salt component may comprise sodium chloride or a composition comprised in part and desirably predominantly of sodium chloride. The culinary salt component may comprise potassium chloride and/or any other sodium chloride substitute. The culinary salt component may comprise a mixture of sodium chloride and potassium chloride, with or without other components such as anti-caking agent. The culinary salt component may comprise between 2% and 8% by weight of the aqueous component.

The composition may comprise an acidic component in an amount between 0.1% and 5% by weight of the aqueous component. The acidic component may comprise a food grade acid, such as acetic acid. The acid component may be 100% acid or may be diluted, such as to between 80% and 95% acid strength. The acidic component may comprise between 0.5% and 3% by weight, and in certain embodiments between 0.5% and 4.5% and in others between 0.1 % and 2% by weight of the aqueous component.

The composition may have a pH of 4.5 or less at 20°C. The composition may have a pH of 3.9 or less at 20°C. The composition may have a pH of between 3 and 3.9 at 20°C.

The presence of the salt component and/or the acidic component provides the composition with good self-preservation characteristics, helping to prevent or hinder spoilage of the composition, and particularly the spoilage of the aqueous component by micro organism and yeast infection. In such embodiments of the invention there is typically no need for the composition to be subjected to conventional preservation techniques such as pasteurisation, sterilisation, pressure treatment, heat treatment and irradiation. This gives the compositions of the present invention particular advantage over known compositions, such as ease and relative low cost of manufacture, packaging and the like.

In certain embodiments, the compositions of the present invention can be manufactured free of alcohol, thus enabling them to meet the needs and preferences of certain consumers.

In other embodiments, the composition may comprise alcohol, primarily as a preservative for the aqueous component. The alcohol may be provided instead of or alongside one or more of the acidic component and culinary salt component. The composition may comprise up to about 20% by weight of pure alcohol, and preferably up to about 5% by weight of the composition. The alcohol may comprise between 10% and 13% by weight of the aqueous component. The alcohol may comprise pure, anhydrous, alcohol or may be diluted alcohol, such as 96% alcohol. The alcohol may be substantially comprised in the aqueous component.

In certain embodiments, the composition may be subjected to preservation treatments such as by one or more of irradiation, aseptic filling, pasteurisation, sterilisation, heat treatment, super-pressure treatment, chemical preservation such as using benzoic acid, sulphur dioxide or its compounds, sorbic acid (or their salts), potassium sorbate, and any other suitable method.

The composition may comprise an emulsifier present in an amount between 1% and 15% by weight of the composition and desirably in an amount 2% to 5% by weight of the composition. The emulsifier may comprise a single type of emulsifier or may comprise a combination of one or more emulsifiers. The emulsifier may comprise a sugar ester, such as a sucrose ester, monoglyceride, oligoglyceride, modifications or derivatives thereof, or any other suitable emulsifier.

The composition may comprise further components, such as one or more of flavourings, preservatives such as benzoic acid, sorbic acid and/or their salts, colourings, antioxidants (such as Vitamin C and its components, tocopherols, gallates, tea extract, rosemary extract, tannic acid, BHA, BHT, BHQ), stabilisers, thickeners, spice extracts, acidity regulators, seasonings, aromatics, herb extracts, collating agents (such as EDTA and/or compounds, salts or derivatives of EDTA).

According to a further aspect of the present invention, there is provided a method of dispensing a sprayable liquid edible composition as described above, the method comprising spraying a predetermined amount of composition with a known calorific content.

According to a still further aspect of the present invention, there is provided a dispenser containing a bulk supply of sprayable liquid edible composition as described in any of the paragraphs above, the dispenser being arranged to spray upon actuation a predetermined amount of composition with a known calorific content.

Embodiments of the present invention will now be described by way of example only.

There is provided a sprayable liquid edible composition comprising an oil component in an amount 0.1% to 70%, an aqueous component in an amount 25% to 98%, a non-stick component in an amount 0.1% to 15% and a gum component in an amount 0.01% to 0.05%.

The sprayable liquid edible compositions of the present invention find particular application as sprayable non-stick cooking compositions, particularly for domestic but also for commercial use. In addition the compositions find application in non-cooking situations, such for helping to prevent foodstuffs from sticking to themselves, to containers, implements and packaging.

In certain embodiments, the gum component consists exclusively or substantially exclusively of xanthan gum, and in such embodiments the advantages that have been realised in using xanthan gum, as will be explained, are typically most evident.

Xanthan gum is typically available in dry powder, dry flake or dry fine granular form and exhibits pseudoplastic and/or thixotropic properties when dissolved in an aqueous medium, and thus when dispersed in the aqueous component it affords the compositions of the present invention with improved stability and thus shelf life (combined with excellent spray characteristics as the viscosity reduces as the composition is subjected to the shear forces at the time of spray - so called pseudoplasticity) when compared to similar compositions that use alternative, conventional stabilisers instead of the xanthan gum that do not exhibit such properties, such as sucrose esters, monoglycerides and oligoglycerides. The amounts of xanthan gum component specified herein are with reference to the dry, powder weight of the component.

A practical advantage of the use of xanthan gum is that it can be used directly without any pre-preparation, whereas conventional stabilisers such as powdered sucrose esters can require laborious mixing in strong alcohol and allowed to develop or bloat for eight hours or more before they can be used.

Xanthan gum occurs naturally in lactic fermented cabbage. It is produced commercially by the bacterial fermentation of sugars or carbohydrates, in particular glucose or sucrose.

A key feature of the compositions of the present invention is that they are sprayable at certain temperatures disclosed herein. The compositions are typically sprayed using hand-held spray devices such as mechanised finger-pump spray devices and aerosols. The compositions should preferably be sprayed as a diffuse, wide, even spray pattern, which typically requires them to be sprayed through small spray orifices, typically in the order of 0.1 mm to 0.5 mm and typically 0.3mm in diameter. To achieve satisfactory sprays, the compositions need to be within suitable viscosity ranges when being sprayed, but conventionally oil and water emulsions with such low viscosities tend to suffer from poor long term stability, tending to easily separate in storage. The thixotropic/pseudoplastic properties of the xanthan gum in the composition address this, enabling the viscosity of the compositions to reduce at the instant they experience the shear forces of spraying, so called shear thinning (as the compositions are forced through the spray mechanism and spray outlet), presenting the compositions as sufficiently low momentary viscosity, fluid liquid at the instant of spray, thus facilitating the formation of even and diffuse spray patterns.

When the compositions are at rest, ie are not being subjected to shear forces, the thixotropic/pseudoplastic properties of the xanthan cause the aqueous component of the compositions to behave as a thin gel, typically to take the form of a light gel, which acts to thicken and stabilise the composition, in particular to stabilise the dispersion of the other components of the composition, including stabilisation of the emulsion itself.

It has been found that using xanthan gum in the compositions of the present invention typically extends stability of the emulsion and therefore the effective shelf life (when stored under the same conditions) of the compositions compared to the same compositions wherein conventional stabilisers such as sucrose esters, mono/diglycerides are used in place of the xanthan gum. The shelf life in certain embodiments can be double, triple or even quadruple the length of the shelf life of equivalent compositions using conventional stabilisers.

In certain other embodiments, the gum component comprises xanthan gum and one or more other polysaccharides, such as carrageenan, and/or derivatives thereof. Typically, these are all in dry, powder form. The gum component can in certain embodiments comprise one or more other substances as well as or instead of the aforesaid one or more of xanthan gum and other polysaccharides, such as one or more gums, including guar, Arabic, tragacanth, acacia, cellulose, methyl cellulose, alginate (alginic acid), agar, processed eucheuma seaweed, carob bean gum, modified starch, pregelatinised starch, tara gum, gellan gum, cellulose gum, cellulose ether, methylcellulose and other modified cellulose gums. These would typically be sourced as dry powder and dissolved or dispersed in the aqueous component, either directly or pre-dissolved in a premix.

In certain embodiments, the constituents of the gum component are all natural, non-synthetic forms, and in other embodiments some or all of the constituents are synthetic. Appropriate, essentially functionally equivalent derivatives of one or more of the constituents of the gum component can be used. The gum component can be in the form of a dry particulate such as flake, powder and/or granule.

During preparation of the compositions the gum component can be dispersed either totally or in part, in a suitable dispersant, such as some of the oil component, and then introduced into the aqueous phase and typically stirred in with great energy and speed, to disperse the gum particulate carried by the oil in the aqueous phase. A Silverson mixer is an effective mixer to achieve satisfactory results, although other mixers can be used, such as bakers' whips, rotating propellers, screws, hand-held mixing devices, to name just a few.

For xanthan and other gums, this can take place without the need for heating, but for other gums the application of heat is generally considered necessary for satisfactory mixing.

The gum powder then hydrates, swells and dissolves into the aqueous component.

Alternative dispersants for the gum powder can be used, such as fine sugar grains, fine salt grains. Although the gums generally dissolve in water, they ideally should be pre-dispersed in oil or grains to prevent particles of wetted powder from agglomerating into gel balls, that would hinder or prevent spraying.

The gum component can be added to the composition as a pre-mix in which the gum component has been premixed and dissolved to be more readily introduced to the composition than when in the powder, dry form.

In particular embodiments, approximately 0.03% of gum component is used. In such embodiments, particularly those using approximately 0.03% or below of gum component, the gum component would typically consist exclusively or almost entirely of gum.

Typically the gum component has the combined effects of a thickening agent, an emulsifier and a stabilising agent. These combined effects of the gum component enable the amounts of non-stick agent, typically lecithin or a lecithin-derived product, to be kept relatively low, thus enabling a realisation of cost efficiency due to the relatively high financial cost of lecithin compared to the gum component, particularly xanthan gum.

In certain embodiments the non-stick component is present in an amount between 1% and 10% by weight of the total composition. In still further embodiments, the non-stick component is present in amounts between 3% and 6% by weight of the composition.

The non-stick component used can consist of natural and/or synthetic lecithin and/or modifications, derivatives or compounds thereof. In certain embodiments the non-stick component is liquid, particularly at typical household room temperatures such as between 15°C and 40°C. In other embodiments the non-stick component is non-liquid. In certain embodiments the non-stick component can be de-oiled and in the form of powder, paste or granules. In certain embodiments the non-stick component comprises a combination of various forms, types and derivatives of lecithin and can comprise sunflower lecithin with other substances such as one or more other lecithins and/or other non-stick agents permitted for use in foods.

The oil component typically comprises one or more of liquid vegetable oil, olive oil, extra virgin olive oil, virgin olive oil, refined olive oil, refined olive oil, rapeseed oil, sunflower oil, soy bean oil, canola oil, cotton seed oil, corn oil, ground nut oil, grape seed oil, butter oil, fractionated oil such as medium chain triglyceride, hydrogenated, partially hydrogenated oils, refined fractions of mineral oil, although any suitable sprayable oil/fat can be used. Any oils/fats used that are solid or semi-solid (waxy) at the spray temperature are predissolved in a liquid oil, such as sunflower oil and/or medium chain triglyceride oils (light fraction of palm oil), to be sprayable, typically at 7°C and above.

In certain embodiments the oil component amounts to between 0.1% and 10% by weight of the composition. In further embodiments, the oil component comprises between 10% and 60% by weight of the composition and in still further embodiments between 50% and 70% by weight.

In certain embodiments the aqueous component comprises between 30% and 80% by weight of the compositions. In particular embodiments the aqueous component comprises between 25% and 50% by weight of the composition and in further embodiments the aqueous component comprises between 75% and 90% by weight of the composition.

The aqueous component is water in certain embodiments, and in other embodiments comprises between 70% and 99% water. In certain embodiments the aqueous component contains water soluble or generally water soluble components of the composition.

The compositions of the present invention are typically sprayable at temperatures between 5°C and 50°C. More particularly, compositions of the present invention are sprayable at temperatures between 10°C and 25°C.

The compositions of the present invention are intended for use by a person during the preparation of food, which typically takes place in a kitchen or similar such environment. The compositions of the present invention are therefore sprayable at typical kitchen temperatures. To be sprayable, the compositions are liquid at the aforesaid temperatures. The compositions would typically be sprayed during use through a hand-held dispensing container operable through a mechanical pump, aerosol or other finger-actuated device. Typically the composition would be sprayable through a device that has a spray orifice in the order of 0.1 mm to 0.3 mm, although depending upon the calibration of the dispenser (eg the pressure of spray) and the viscosity of the composition, spraying through smaller or larger orifices is possible.

The use of xanthan gum in the gum component therefore provides the compositions of the present invention with significant advantages over the prior art. These are mainly the observed significant combined improvements in the stability of the compositions (due in the main to the relatively high viscosity of the compositions when at rest) and the improved sprayability of the compositions (due in the main to the relatively low viscosity at the point of spraying) compared to similar compositions comprising conventional stabilisers and not xanthan gum. A further advantage is that the xanthan gum can be used directly in the compositions without any pre-preparation. For certain known stabilisers such as sucrose esters, the powder has to be pre-prepared by mixing in alcohol and allowing to swell for several hours before it can be mixed into the compositions. In certain territories the use of sucrose esters as stabilisers is restricted, particularly as an ingredient of non-stick cooking compositions, but presently xanthan gum is accepted as a permitted food additive.

Typically the compositions of the present invention are in the form of a generally homogenous emulsion. The non-stick agent can act as an emulsifier, and when it comprises sunflower lecithin, this has been shown to offer improved stability of the emulsion when compared to similar compositions comprising the equivalent amount of soya lecithin in place of the sunflower lecithin.

The compositions of the present invention are typically preserved to help achieve a satisfactory shelf life and prevent spoilage from infection, particularly of the aqueous phase.

In certain embodiments the composition comprises a culinary salt component in an amount between 0.1% and 25% by weight of the aqueous component. The culinary salt component would typically comprise sodium chloride or a composition comprised in part or predominately of sodium chloride. The culinary salt component can include potassium chloride and/or any other sodium chloride substitutes. The chlorides are preferred such as the salts of sodium, potassium, magnesium and calcium, as the chloride ion has been found to present good preservation properties against food spoilage microorganisms. Anti-caking agents can be provided. In certain embodiments the culinary salt component comprises between 2% and 8% by weight of the aqueous component.

In some embodiments the composition comprises an acidic component in an amount between 0.1% and 5% by weight of the aqueous component. The acidic component would typically comprise a food grade acid, such as acetic acid. The acidic component could comprise a combination of acidulants permitted for food use. The acid component could be used as 100% acid or as a diluted acid such as an 80% to a 95% strength acid. In certain embodiments the acidic component comprises between 0.5% and 3% by weight and in certain embodiments between 0.5 and 4.5% and in others between 0.1 % and 2% by weight of the aqueous component.

In further embodiments the acidic component used is relatively weakly acidic or highly diluted, such as vinegar and/or citric fruit juices, in which case the acidic component is used in proportionally larger quantities to achieve the desired preservative effects.

In certain embodiments the composition has a pH of 4.5 or less at 20°C. Certain compositions have a pH of 3.9, and typical compositions of the present invention have a pH of 3.0 and 3.9 at 20°C. Such acidic pH protects the compositions against spoilage by pathogenic micro-organisms such as Chlostridium botulinum, Salmonella, Listeria and other potentially harmful bacteria.

It has been found that in compositions where the acidic component and salt component are provided together, the composition has particularly good self preservation characteristics. Particularly favoured compositions comprise acetic acid as some or all of the acidulant and sodium chloride as some or all of the salt component. It is the aqueous phase that typically suffers from spoilage by micro-organisms and yeast infection and the presence of a salt component and an acidic component has been found to be sufficient to provide compositions of the present invention with good self preservation characteristics, obviating the need for more conventional preservation techniques such as pasteurisation, sterilisation, pressure treatment and irradiation to be employed. The salt component and acidic component also allow compositions to be formulated that are free of alcohol, which is typically otherwise used as a preservative.

It will be appreciated that in certain embodiments the compositions may be preserved by alcohol, either alone or in combination with one or both of the aforesaid acidic component and salt component.

In compositions where alcohol is used as a preservative, the alcohol is typically present in amounts up to about 5% by weight of the composition, or 10% to 13% of the aqueous component. The alcohol can be used as a pure, anhydrousalcohol or as a diluted alcohol, such as 96% alcohol. In such compositions, the alcohol would typically be comprised in the aqueous component.

The aforesaid preservation techniques may be supplemented by other techniques such as one or more of irradiation, aseptic filling, pressure treatment, electrolytic treatment, pasteurisation, sterilisation, sulphur dioxide or its compounds, chemical preservations such as the use of benzoic acid, sorbic acid (or their salts such as sodium benzoate and potassium sorbate) and any other suitable methods.

The compositions of the present invention can comprise an emulsifier (in addition to any emulsifier properties of the non-stick component) in an amount up to between 1% and 15% by weight of the composition and in certain embodiments in amounts of between 2% and 5% by weight of the composition. The emulsifier can be a single type of emulsifier or a combination of one or more emulsifiers. The emulsifier can comprise a sugar ester; such as a sucrose ester or a derivative thereof.

The compositions of the present invention can comprise further components, such as one or more of flavourings, preservatives such as benzoic acid, sorbic acid and/or their salts, colourings, anti-oxidants (such as vitamin C and its components, tocopherol, gallates, tea extract, rosemary extract, tannic acid, BHA, BHT, BHQ) stabilisers, thickeners, spice extracts, acidity regulators, seasonings, aromatics, herb extracts, collating agents (such EDTA and/or its compounds, salts or derivatives of EDTA).

The invention also provides a method of dispensing the sprayable liquid edible compositions described above, the method comprising spraying a predetermined amount of composition with a known calorific content.

The invention further provides a dispenser containing a bulk supply of sprayable liquid edible composition as described above, the dispenser being arranged to spray upon actuation a predetermined amount of composition with a known calorific content.

Below is a selection of examples of compositions according to the present invention.

### Example 1

| **Composition** | **% of total composition (by weight)** |
|---|---|
| Sunflower oil | 59.1% |
| Water | 32.1% |
| Ethanol (96%) | 4.3% |
| Soya Lecithin (liquid) | 4.4% |
| Tocopherol | 0.06% |
| Xanthan gum (80 mesh powder) | 0.04% |

The various components are mixed to form a generally homogenous emulsion.

The composition has a pH range of 6.4 to 7.4 at 20°C and a typical viscosity of 650 to 1150 centipoise (0.65 to 1.15 PaS) at 20°C.

The composition produced has excellent stability and sprayable characteristics. The viscosity of the composition is typically in the range 650 to 1150 centipoise at 20°C when in a steady state in which the compositions are not exposed to any appreciable shear forces (eg in storage). This relatively high viscosity is in the main imparted by the xanthan gum component and in particular the xanthan gum therein and provides the compositions with good stability characteristics. The above composition can typically be stored at ambient room temperatures (typically less than 30°C) for up to 12 months. When the composition is subjected to the typical shear forces it would experience when being drawn through the spray device to be dispensed, the viscosity reduces, thus giving the composition improved fluidity and thus excellent sprayability, enabling diffuse and even spray patterns to be achieved through spray orifices as small as 0.1 mm to 0.3 mm in diameter, under relatively low spray pressures of typical finger actuated hand-held devices with mechanical pump or aerosol dispensing mechanisms.

The alcohol provides the means of preservation. One or more of the other preservation techniques discussed above can be used to complement or replace.

### Example 2

| **Composition** | **% of total composition** |
|---|---|
| Extra virgin olive oil | 57.7% |
| Water | 32.2% |
| Ethanol (96%) | 4.3% |
| Lecithin (liquid) | 5.3% |
| Tocopherol | 0.09% |
| Xanthan gum (80 mesh) | 0.03% |

This composition has a pH of between 6.25 and 7.25 and a viscosity of 850 to 1350 centipoise (0.85 to 1.35 PaS) at 20°C at rest.

### Example 3

| **Composition** | **% of total composition (unless otherwise specified)** |
|---|---|
| Sunflower oil | 57.3% |
| Water | 32.2% |
| Ethanol (96%) | 4.3% |
| Sunflower lecithin (liquid) | 5.3% |
| Butter flavouring | 0.78% |
| Tocopherol | 0.09% |
| Xanthan gum (80 mesh) | 0.03% |

Compositions produced according to this recipe typically have a pH in the order of 5.0 to 6.0 and a viscosity of 750 to 1250 centipoise (0.75 to 1.25 PaS) at 20°C at rest.

### Reference Example 4

| **Composition** | **% of total composition (unless otherwise specified)** |
|---|---|
| Sunflower oil | 59.1% |
| Water | 34.24% |
| Ethanol (96%) | 4.3% |
| Rapeseed lecithin (de-oiled, powdered) | 2.2% |
| Tocopherol concentrate | 0.06% |
| Xanthan gum (80 mesh) | 0.1% |

### Example 5

| **Composition** | **% of total composition (unless otherwise specified)** |
|---|---|
| Olive oil | 8.03% |
| Water | 85% |
| Ethanol | 4.3% |
| Soya lecithin (de-oiled, powdered) | 2.6% |
| Tocopherol concentrate | 0.06% |
| Xanthan gum (80 mesh) | 0.01% |

### Reference Example 6

| **Composition** | **% of total of composition (unless otherwise specified)** |
|---|---|
| Vegetable oil | 65% |
| Water | 28.54% |
| Ethanol | 4.0% |
| Lecithin (powdered) | 2.3% |
| Tocopherol (concentrate) | 0.06% |
| Xanthan gum (80 mesh) | 0.1% |

### Example 7

| **Composition** | **% of total of composition (unless otherwise specified)** |
|---|---|
| Sunflower oil | 58.6% |
| Water | 32.9% |
| Ethanol (96%) | 4.3% |
| Lecithin (liquid) | 4.2% |
| Tocopherol concentrate | 0.06% |
| Xanthan gum (80 mesh) | 0.03% |

### Example 8

| **Composition** | **% of total of composition (unless otherwise specified)** |
|---|---|
| Sunflower oil | 58.49% |
| Water | 32.9% |
| Ethanol (96%) | 4.3% |
| Lecithin (liquid) | 4.2% |
| Tocopherol concentrate | 0.06% |
| Guar gum | 0.05% |

### Reference Example 9

| **Composition** | **% of total of composition (unless otherwise specified)** |
|---|---|
| Sunflower oil | 58.47% |
| Water | 32.9% |
| Ethanol (96%) | 4.3% |
| Lecithin (liquid) | 4.2% |
| Tocopherol concentrate | 0.06% |
| Carob bean gum | 0.07% |

### Example 10

| **Composition** | **% of total of composition (unless otherwise specified)** |
|---|---|
| Sunflower oil | 58.47% |
| Water | 32.9% |
| Ethanol (96%) | 4.3% |
| Lecithin (liquid) | 4.2% |
| Tocopherol concentrate | 0.06% |
| Gum tragacanth | 0.03% |

### Reference Example 11

| **Composition** | **% of total of composition (unless otherwise specified)** |
|---|---|
| Sunflower oil | 58.44% |
| Water | 32.9% |
| Ethanol (96%) | 4.3% |
| Lecithin (liquid) | 4.2% |
| Tocopherol concentrate | 0.06% |
| Gum acacia | 0.1% |

### Example 12

| **Composition** | **% of total of composition (unless otherwise specified)** |
|---|---|
| Sunflower oil | 58.52% |
| Water | 32.9% |
| Ethanol (96%) | 4.3% |
| Lecithin (liquid) | 4.2% |
| Tocopherol concentrate | 0.06% |
| Guar gum | 0.02% |

### Examole 13

| **Composition** | **% of total of composition (unless otherwise specified)** |
|---|---|
| Sunflower oil | 58.52% |
| Water | 32.9% |
| Ethanol (96%) | 4.3% |
| Lecithin (liquid) | 4.2% |
| Tocopherol concentrate | 0.06% |
| Carob bean gum | 0.02% |

### Reference Example 14

| **Composition** | **% of total of composition (unless otherwise specified)** |
|---|---|
| Sunflower oil | 58.48% |
| Water | 32.9% |
| Ethanol (96%) | 4.3% |
| Lecithin (liquid) | 4.2% |
| Tocopherol concentrate | 0.06% |
| Methyl cellulose | 0.06% |

### Example 15

| **Composition** | **% of total of composition (unless otherwise specified)** |
|---|---|
| Sunflower oil | 58.49% |
| Water | 32.9% |
| Ethanol (96%) | 4.3% |
| Lecithin (liquid) | 4.2% |
| Tocopherol concentrate | 0.06% |
| Alginate | 0.05% |

The alginate could comprise one or more of sodium alginate, calcium alginate and/or potassium alginate.

### Example 16

| **Composition** | **% of total of composition (unless otherwise specified)** |
|---|---|
| Sunflower oil | 58.49% |
| Water | 32.9% |
| Ethanol (96%) | 4.3% |
| Lecithin (liquid) | 4.2% |
| Tocopherol concentrate | 0.06% |
| Agar | 0.05% |

### Example 17

| **Composition** | **% of total of composition (unless otherwise specified)** |
|---|---|
| Sunflower oil | 58.49% |
| Water | 32.9% |
| Ethanol (96%) | 4.3% |
| Lecithin (liquid) | 4.2% |
| Tocopherol concentrate | 0.06% |
| Processed eucheuma seaweed | 0.05% |

### Example 18

| **Composition** | **% of total of composition (unless otherwise specified)** |
|---|---|
| Sunflower oil | 58.49% |
| Water | 32.9% |
| Ethanol (96%) | 4.3% |
| Lecithin (liquid) | 4.2% |
| Tocopherol concentrate | 0.06% |
| Cellulose gum | 0.05% |

### Example 19

| **Composition** | **% of total of composition (unless otherwise specified)** |
|---|---|
| Sunflower oil | 58.49% |
| Water | 32.9% |
| Ethanol (96%) | 4.3% |
| Lecithin (liquid) | 4.2% |
| Tocopherol concentrate | 0.06% |
| Tara gum | 0.05% |

### Example 20

| **Composition** | **% of total of composition (unless otherwise specified)** |
|---|---|
| Sunflower oil | 58.49% |
| Water | 32.9% |
| Ethanol (96%) | 4.3% |
| Lecithin (liquid) | 4.2% |
| Tocopherol concentrate | 0.06% |
| Gellan gum | 0.05% |

The above particular examples of compositions each comprise a particular type of gum. It will be appreciated by those skilled in the art that compositions can be made within the scope of the present invention in which more than one type of gum is used, the respective amounts of each, and the other constituents adjusted accordingly.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. A sprayable liquid edible composition comprising an oil component in an amount 0.1 % to 70%, an aqueous component in an amount 25% to 98%, a non-stick component in an amount 0.1 % to 15% and a gum component in an amount 0.01% to 0.05% by weight of the composition.

2. A sprayable liquid edible composition as claimed in claim 1, in which the gum component comprises natural and/or synthetic xanthan gum and/or modifications and/or derivatives thereof.

3. A sprayable liquid edible composition as claimed in any preceding claim, in which the gum component comprises one or more of sodium alginate, calcium alginate, potassium alginate, alginic acid, agar, carrageenan, processed eucheuma seaweed, carob (locust) bean gum, guar gum, tragacanth gum, acacia gum, tara gum, gellan gum.

4. A sprayable liquid edible composition as claimed in any preceding claim, in which the gum component comprises approximately 0.03% by weight of the composition.

5. A sprayable liquid edible composition as claimed in any preceding claim, in which the non-stick component comprises natural and/or synthetic lecithin and/or a modification, derivative or compound thereof.

6. A sprayable liquid edible composition as claimed in any preceding claim, in which the non-stick component is present in an amount between 1% and 10% by weight of the composition.

7. A sprayable liquid edible composition as claimed in any preceding claim, in which the non-stick component is present in an amount between 3% and 6% by weight of the composition.

8. A sprayable liquid edible composition as claimed in any preceding claim, in which the oil component comprises between 0.1% and 10% by weight of the composition.

9. A sprayable liquid edible composition as claimed in any of claims 1 to 8, in which the oil component comprises between 10% and 60% by weight of the composition.

10. A sprayable liquid edible composition as claimed in any of claims 1 to 7, in which the oil component comprises between 50% and 70% by weight of the composition.

11. A sprayable liquid edible composition as claimed in any preceding claim, in which the aqueous component comprises between 30% and 80% by weight of the composition.

12. A sprayable liquid edible composition as claimed in any preceding claim, in which the aqueous component comprises between 25% and 50% by weight of the composition.

13. A sprayable liquid edible composition as claimed in any of claims 1 to 10, in which the aqueous component comprises between 75% and 90% by weight of the composition.

14. A sprayable liquid edible composition as claimed in any preceding claim, in which the composition has a pH of 4.5 or less at 20°C.

15. A sprayable liquid edible composition as claimed in any preceding claim, in which the composition has a pH of 3.9 or less at 20°C.

16. A sprayable liquid edible composition as claimed in any preceding claim, in which the composition comprises an emulsifier present in an amount of 2% to 5% by weight of the composition.

17. A method of dispensing a sprayable liquid edible composition as claimed in any of claims 1 to 16, in which the method comprises spraying a predetermined amount of composition with a known calorific content.

18. A dispenser containing a bulk supply of sprayable liquid edible composition as claimed in any of claims 1 to 16, the dispenser being arranged to spray upon actuation a predetermined amount of composition with a known calorific content.

## Patentansprüche

1. Sprühbare essbare Flüssigzusammensetzung aufweisend eine Ölkomponente in einer Menge von 0.1Gew.-% bis 70Gew.-%, eine wässrige Komponente in einer Menge von 25Gew.-% bis 98Gew.-%, eine Antihaft-Komponente in einer Menge von 0.1Gew.-% bis 15Gew.-% und eine Gummi-Komponente in einer Menge von 0.01Gew.-% bis 0.05Gew.-% der Zusammensetzung.

2. Sprühbare essbare Flüssigzusammensetzung wie in Anspruch 1 beansprucht, in der die Gummi-Komponente natürliches und/oder synthetisches Xanthangummi und/oder Modifikationen und/oder Derivate hiervon aufweist.

3. Sprühbare essbare Flüssigzusammensetzung wie in einem der vorhergehenden Ansprüche beansprucht, in der die Gummi-Komponente ein oder mehrere aus Natriumalginat, Calciumalginat, Kaliumalginat, Alginsäure, Agar, Carrageen, verarbeitete Euchema-Algen, Johannisbrotkernmehl, Guarkernmehl, Tragantgummi, Akaziengummi, Tarakernmehl, Gellan aufweist.

4. Sprühbare essbare Flüssigzusammensetzung wie in einem der vorhergehenden Ansprüche beansprucht, in der die Gummi-Komponente ungefähr 0.03Gew.-% der Zusammensetzung ausmacht.

5. Sprühbare essbare Flüssigzusammensetzung wie in einem der vorhergehenden Ansprüche beansprucht, in der die Antihaft-Komponente natürliches und/oder synthetisches Lecithin und/oder eine Modifikation, Derivat oder Mischung hiervon aufweist.

6. Sprühbare essbare Flüssigzusammensetzung wie in einem der vorhergehenden Ansprüche beansprucht, in der die Antihaft-Komponente in einer Menge zwischen 1Gew.-% und 10Gew.-% der Zusammensetzung vorliegt.

7. Sprühbare essbare Flüssigzusammensetzung wie in einem der vorhergehenden Ansprüche beansprucht, in der die Antihaft-Komponente in einer Menge zwischen 3Gew.-% und 6Gew.-% der Zusammensetzung vorliegt.

8. Sprühbare essbare Flüssigzusammensetzung wie in einem der vorhergehenden Ansprüche beansprucht, in der die Ölkomponente zwischen 0.1Gew.-% und 10Gew.-% der Zusammensetzung ausmacht.

9. Sprühbare essbare Flüssigzusammensetzung wie in einem der Ansprüche 1 bis 7 beansprucht, in der die Ölkomponente zwischen 10Gew.-% und 60Gew.-% der Zusammensetzung ausmacht.

10. Sprühbare essbare Flüssigzusammensetzung wie in einem der Ansprüche 1 bis 7 beansprucht, in der die Ölkomponente zwischen 50Gew.-% und 70Gew.-% der Zusammensetzung ausmacht.

11. Sprühbare essbare Flüssigzusammensetzung wie in einem der vorhergehenden Ansprüche beansprucht, in der die wässrige Komponente zwischen 30Gew.-% und 80Gew.-% der Zusammensetzung ausmacht.

12. Sprühbare essbare Flüssigzusammensetzung wie in einem der vorhergehenden Ansprüche beansprucht, in der die wässrige Komponente zwischen 25Gew.-% und 50Gew.-% der Zusammensetzung ausmacht.

13. Sprühbare essbare Flüssigzusammensetzung wie in einem der Ansprüche 1 bis 10 beansprucht, in der die wässrige Komponente zwischen 75Gew.-% und 90Gew.-% der Zusammensetzung ausmacht.

14. Sprühbare essbare Flüssigzusammensetzung wie in einem der vorhergehenden Ansprüche beansprucht, in der die Zusammensetzung einen pH von 4.5 oder weniger bei 20°C hat.

15. Sprühbare essbare Flüssigzusammensetzung wie in einem der vorhergehenden Ansprüche beansprucht, in der die Zusammensetzung einen pH von 3.9 oder weniger bei 20°C hat.

16. Sprühbare essbare Flüssigzusammensetzung wie in einem der vorhergehenden Ansprüche beansprucht, in der die Zusammensetzung einen Emulgator in einer Menge von 2Gew.-% bis 5Gew.-% aufweist.

17. Verfahren zur Verteilung einer sprühbaren essbaren Flüssigzusammensetzung wie in einem der Ansprüche 1 bis 16 beansprucht, das Verfahren umfassend das Sprühen einer vorbestimmten Menge der Zusammensetzung mit einem bekannten Brenngehalt.

18. Verteiler beinhaltend einen großen Vorrat an sprühbarer essbarer Zusammensetzung wie in einem der Ansprüche 1 bis 16 beansprucht, der Verteiler ist eingerichtet, um bei Betätigung eine vorbestimmte Menge der Zusammensetzung mit einem bekannten Brenngehalt zu versprühen.

## Revendications

1. Composition comestible liquide pulvérisable comprenant un composant huileux en une quantité de 0,1% à 70%, un composant aqueux en une quantité de 25% à 98%, un composant antiadhésif en une quantité de 0,1% à 15% et un composant de gomme en une quantité de 0,01% à 0,05% en poids de la composition.

2. Composition comestible liquide pulvérisable selon la revendication 1, dans laquelle le composant de gomme comprend une gomme de xanthane naturelle et / ou synthétique et / ou des modifications et / ou des dérivés de celle-ci.

3. Composition comestible liquide pulvérisable selon l'une quelconque des revendications précédentes, dans laquelle le composant de gomme comprend un ou plusieurs des éléments suivants : l'alginate de sodium, l'alginate de calcium, l'alginate de potassium, l'acide alginique, l'agar-agar, le carraghénane, les algues d'eucheuma traitées, la gomme de caroube, la gomme de guar, la gomme d'adragant, la gomme d'acacia, la gomme de tara, la gomme de gellane.

4. Composition comestible liquide pulvérisable selon l'une quelconque des revendications précédentes, dans laquelle le composant de gomme constitue environ 0,03% en poids de la composition.

5. Composition comestible liquide pulvérisable selon l'une quelconque des revendications précédentes, dans laquelle le composant antiadhésif comprend une lécithine naturelle et / ou synthétique et / ou une modification, un dérivé ou un composé de celle-ci.

6. Composition comestible liquide pulvérisable selon l'une quelconque des revendications précédentes, dans laquelle le composant antiadhésif est présent en une quantité comprise entre 1% et 10% en poids de la composition.

7. Composition comestible liquide pulvérisable selon l'une quelconque des revendications précédentes, dans laquelle le composant antiadhésif est présent en une quantité comprise entre 3% et 6% en poids de la composition.

8. Composition comestible liquide pulvérisable selon l'une quelconque des revendications précédentes, dans laquelle le composant huileux constitue entre 0,1% et 10% en poids de la composition.

9. Composition comestible liquide pulvérisable selon l'une quelconque des revendications 1 à 8, dans laquelle le composant huileux constitue entre 10% et 60% en poids de la composition.

10. Composition comestible liquide pulvérisable selon l'une quelconque des revendications 1 à 7, dans laquelle le composant huileux constitue entre 50% et 70% en poids de la composition.

11. Composition comestible liquide pulvérisable selon l'une quelconque des revendications précédentes, dans laquelle le composant aqueux constitue entre 30% et 80% en poids de la composition.

12. Composition comestible liquide pulvérisable selon l'une quelconque des revendications précédentes, dans laquelle le composant aqueux constitue entre 25% et 50% en poids de la composition.

13. Composition comestible liquide pulvérisable selon l'une quelconque des revendications 1 à 10, dans laquelle le composant aqueux constitue entre 75% et 90% en poids de la composition.

14. Composition comestible liquide pulvérisable selon l'une quelconque des revendications précédentes, dans laquelle la composition a un pH de 4,5 ou moins à 20 °C.

15. Composition comestible liquide pulvérisable selon l'une quelconque des revendications précédentes, dans laquelle la composition a un pH de 3,9 ou moins à 20 °C.

16. Composition comestible liquide pulvérisable selon l'une quelconque des revendications précédentes, dans laquelle la composition comprend un émulsifiant présent en une quantité de 2% à 5% en poids de la composition.

17. Procédé de distribution d'une composition comestible liquide pulvérisable selon l'une quelconque des revendications 1 à 16, dans lequel le procédé comprend la pulvérisation d'une quantité prédéterminée de composition avec un contenu calorifique connu.

18. Distributeur contenant une réserve de composition comestible liquide pulvérisable selon l'une quelconque des revendications 1 à 16, le distributeur étant agencé pour pulvériser lors de l'actionnement une quantité prédéterminée de composition avec un contenu calorifique connu.
